# EUROPEAN PATENT SPECIFICATION

(11) **EP 4 033 757 B1**
(45) Date of publication and mention of the grant of the patent: **22.04.2026**
(21) Application number: 21849480.5
(22) Date of filing: 16.06.2021
(51) Int. Cl.: G06T 7/521, H04N 13/271

(54) **DEPTH IMAGE GENERATION METHOD AND APPARATUS, REFERENCE IMAGE GENERATION METHOD AND APPARATUS, ELECTRONIC DEVICE, AND COMPUTER READABLE STORAGE MEDIUM**
TIEFENBILDERZEUGUNGSVERFAHREN UND -GERÄT, REFERENZBILDERZEUGUNGSVERFAHREN UND -GERÄT, ELEKTRONISCHE VORRICHTUNG UND COMPUTERLESBARES SPEICHERMEDIUM
PROCÉDÉ ET APPAREIL DE GÉNÉRATION D'IMAGE DE PROFONDEUR, PROCÉDÉ ET APPAREIL DE GÉNÉRATION D'IMAGE DE RÉFÉRENCE, DISPOSITIF ÉLECTRONIQUE ET SUPPORT D'ENREGISTREMENT LISIBLE PAR ORDINATEUR

(30) Priority: 28.07.2020 CN 202010739666
(43) Date of publication of application: 27.07.2022
(73) Proprietor: Tencent Technology (Shenzhen) Company Limited, Shenzhen, Guangdong, 518057 (CN)
(72) Inventor: HONG, Zheming, Shenzhen, Guangdong 518057 (CN); WANG, Jun, Shenzhen, Guangdong 518057 (CN); WANG, Shaoming, Shenzhen, Guangdong 518057 (CN); GUO, Runzeng, Shenzhen, Guangdong 518057 (CN)
(74) Representative: Novagraaf International SA
(86) International application number: PCT/CN2021/100350
(87) International publication number: WO 2022/022136

(56) References cited:
- EP-A1- 3 481 062
- CN-A- 103 024 419
- CN-A- 105 306 922
- CN-A- 106 875 435
- CN-A- 108 711 167
- CN-A- 109 961 406
- CN-A- 112 752 088
- US-B1- 9 361 698
- JASON GENG: "Structured-light 3D surface imaging: a tutorial", ADVANCES IN OPTICS AND PHOTONICS, vol. 3, no. 2, 31 March 2011 (2011-03-31), pages 128, XP055556182, DOI: 10.1364/AOP.3.000128
- GDEISAT M A ET AL: "Spatial and temporal carrier fringe pattern demodulation using the one-dimensional continuous wavelet transform: Recent progress, challenges, and suggested developments", OPTICS AND LASERS IN ENGINEERING, ELSEVIER, AMSTERDAM, NL, vol. 47, no. 12, 1 December 2009 (2009-12-01), pages 1348 - 1361, XP026669792, ISSN: 0143-8166, [retrieved on 20090807], DOI: 10.1016/J.OPTLASENG.2009.07.009

## Description

### RELATED APPLICATION

The present disclosure claims priority to Chinese Patent Application No. 2020107396664, entitled "METHOD AND APPARATUS FOR GENERATING DEPTH IMAGE, METHOD FOR GENERATING REFERENCE IMAGE, AND ELECTRONIC DEVICE" filed on July 28, 2020.

### FIELD OF THE TECHNOLOGY

The present disclosure relates to the technical field of depth imaging, and in particular, to a method and an apparatus for generating a depth image, a method and an apparatus for generating a reference image, an electronic device, and a computer-readable storage medium.

### BACKGROUND OF THE DISCLOSURE

Computer vision technology has developed into a phase in which traditional processing on two-dimensional color images cannot meet a requirement of application in a three-dimensional physical world. A depth image is capable to reflect information on a distance of an object directly, and hence gains more and more application. For example, document "Structured-light 3D surface imaging: a tutorial" by Jason Geng (Advances in Optics and Photonics, vol. 3, no. 2, 31 March 2011 (2011-03-31), page 128) describes structured-light 3D surface imaging technology, in which phase shift are used to obtain depth information of an object.

In conventional technology, some depth images are subject to black borders, which affects their application in some fields. For example, in face authentication, a facial depth image may be introduced to improve accuracy of the authentication. The face authentication may fail in a case that a part of the user's face overlaps with the black border of the facial depth image.

The information disclosed above is merely intended for facilitate understanding of a background of the present disclosure, and therefore may include information that does not constitute conventional technology in the knowledge of a person of ordinary skill in the art.

### SUMMARY

A method and an apparatus for generating a depth image, a method and an apparatus for generating a reference image, an electronic device, and a computer-readable storage medium are provided according to various embodiments of the present disclosure.

In one aspect, a method for generating a depth image is provided, including: projecting a structured light onto a reference plane, and imaging the reference plane through a first active pixel and a second active pixel of an image sensor to obtain a reference image; projecting the structured light onto a target object, and imaging the target object through the first active pixel to obtain a target image; and obtaining the depth image of the target object according to the target image and the reference image.

In another aspect, a method for generating a depth image is provided, including: projecting a structured light onto a target object, and imaging the target object through a first active pixel of an image sensor to obtain a target image; and obtaining the depth image of the target object according to the target image and a reference image; where the reference image is obtained by imaging a reference plane through the first active pixel and a second active pixel of the image sensor.

In another aspect, a method for generating a reference image is provided, including: projecting a structured light onto a reference plane, and imaging the reference plane through a first active pixel and a second active pixel of an image sensor to obtain the reference image, where the first active pixel is an active pixel utilized when performing depth imaging on a target object.

In another aspect, an apparatus for generating a depth image is provided, including: a reference-image generating module, configured to project a structured light onto a reference plane, and image the reference plane through a first active pixel and a second active pixel of an image sensor to obtain a reference image; a target-image obtaining module, configured to project the structured light onto a target object, and image the target object through the first active pixel to obtain a target image; and a depth-image generating module, configured to obtain the depth image of the target object according to the target image and the reference image.

In another aspect, an apparatus for generating a depth image is provided, including: a target-image obtaining module, configured to project structured light onto a target object, and image the target object through a first active pixel of an image sensor to obtain a target image; and a depth-image generating module, configured to obtain the depth image of the target object according to the target image and a reference image; where the reference image is obtained by imaging a reference plane through the first active pixel and a second active pixel of the image sensor.

In another aspect, an apparatus for generating a reference image is provided, including: a reference-image generating module, configured to project a structured light onto a reference plane, and image the reference plane through a first active pixel and a second active pixel of an image sensor to obtain the reference image; where the first active pixel is an active pixel utilized when performing depth imaging on a target object.

In another aspect, an electronic device is provided, including a processor and a memory. The memory is configured to store instructions executable by the processor, and the processor when executing the instructions implements the method according to any foregoing aspect.

In another aspect, a computer-readable storage medium is provided, storing a computer program. The computer program, when executed by a processor, implements the method according to any foregoing aspect.

In another aspect, a computer program product or a computer program is provided, including computer instructions stored in a computer-readable storage medium. A processor of a computer device reads the computer instructions from the computer-readable storage medium, and executes the computer instructions such that the computer device performs the method according to any foregoing aspect.

Embodiments of the present disclosure may have part or all of following beneficial effects.

The method for generating depth image is provided based on embodiments of the present disclosure. The second active pixel, which is not conventionally used, is used along with the first active pixel when generating the reference image, so that a dimension of the generated reference image is increased with respect to the target image. The main cause of the black borders is that in the reference image there is no pixel corresponding pixels at a border of the target image. According to the method in embodiments of the present disclosure, the dimension of the reference image is increased, and hence a part or all of the pixels at the border of the target image can match corresponding pixels in the reference image. Thereby, the black borders are reduced or even eliminated in the depth image.

The foregoing general description and following detailed description are merely illustrative and explanatory, and are not intended for limiting the present disclosure.

### BRIEF DESCRIPTION OF THE DRAWINGS

The drawings are incorporated into this specification, constitute a part of this specification to show embodiments that conform to the present disclosure, and describe a principle of the present disclosure in combination with this specification. Apparently, the drawings described hereinafter are only some embodiments of the present disclosure. A person of ordinary skill in the art may still derive other drawings from these drawings without creative efforts.
Figure 1 is a schematic structural diagram of a depth imaging system to which an embodiment of the present disclosure is applicable.
Figure 2 is a schematic diagram of an application scenario of a method for generating a depth image according to an embodiment of the present disclosure.
Figure 3 is a schematic diagram shown a mechanism of generating a black border according to an embodiment of the present disclosure.
Figure 4 is a schematic flowchart of a method for generating a depth image according to an embodiment of the present disclosure.
Figure 5 is a schematic block diagram of an image sensor according to an embodiment of the present disclosure.
Figure 6 is a schematic structural diagram of an image sensor according to an embodiment of the present disclosure.
Figure 7 is a schematic flowchart of obtaining a depth image according to an embodiment of the present disclosure.
Figure 8 is a schematic diagram showing a principle of block matching according to an embodiment of the present disclosure.
Figure 9 is a schematic diagram showing a principle of calculating depth information corresponding to a target pixel according to an embodiment of the present disclosure.
Figure 10 is a schematic diagram showing a mechanism of generating a black border according to an embodiment of the present disclosure.
Figure 11 is a schematic flowchart of a method for generating a depth image according to an embodiment of the present disclosure.
Figure 12 is a schematic block diagram of an apparatus for generating a depth image according to an embodiment of the present disclosure.
Figure 13 is a schematic structural diagram of a computer system adapted to implement an electronic device according to an embodiment of the present disclosure.

### DESCRIPTION OF EMBODIMENTS

Hereinafter embodiments are comprehensively described with reference to the drawings. The embodiments may be implemented in various forms, and should not be construed as being limited to what is described herein. Rather, the embodiments are provided to make the present disclosure more comprehensive and complete, and the complete concept of the examples of the implementations are conveyed to those skilled in the art. The described features, structures, or characteristics may be combined in one or more embodiments in any appropriate manner. In following description, various specific details are provided to give a full understanding of the embodiments of the present disclosure. It could be appreciated by those skilled in the art that one or more of the specific details may be omitted during practice of technical solutions of the present disclosure, and other methods, components, apparatus, steps, or the like may be utilized. In some cases, well-known technical solutions are not shown or described in detail to avoid improper emphases and thus obscuring some aspects of the present disclosure.

In addition, the accompanying drawings are only schematic illustrations of the present disclosure and are not necessarily drawn to scale. Identical reference numerals in the drawings represent same or similar components, and therefore repeated descriptions of these components are omitted where appropriate. Some of the block diagrams in the drawings show functional entities which do not necessarily correspond to independent physical or logical entities. That is, the functional entities may be implemented in a software form, in one or more hardware modules or integrated circuits, or in different networks and/or processor apparatuses and/or microcontroller apparatuses.

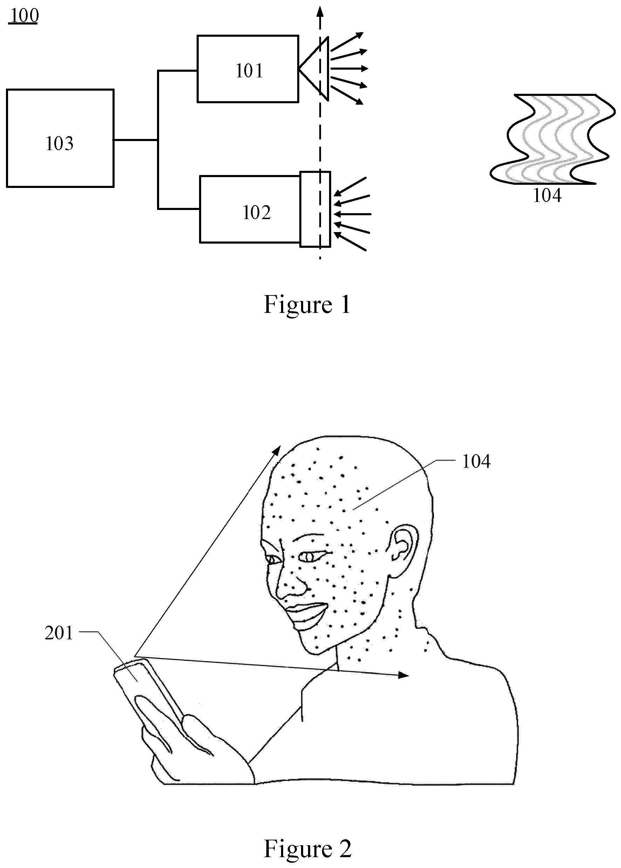

Reference is made to Figure 1, which is a schematic structural diagram of a depth imaging system 100. The depth imaging system 100 as shown in Figure 1 mainly includes a structured-light projecting module 101, an image sensor 102, and a processing module 103. The depth imaging system may be configured to perform depth imaging on a target object 104, so as to obtain a corresponding depth image. The target object 104 may be a face or another object that is to be imaged.

The structured-light projecting module 101 may include a light source and an optical component. The light source may be a laser diode, a semiconductor laser, or the like, and may be an edge-emitting laser, a vertical-cavity surface-emitting laser, a laser array corresponding to either the edge-emitting laser or surface-emitting laser, or the like. A wavelength emitted by the light source may be infrared or ultraviolet. The optical component is configured to modulate a light beam, which is emitted by the light source, to be a structured light emitted outward. The optical component may be a refractive optical element, a diffractive optical element, a combination of the two, or the like. In this embodiment, the structured light may be a beam decoded as speckles, spots, stripes, a two-dimensional pattern, or the like.

The image sensor 102 may be a charge coupled device (CCD) image sensor, a complementary metal-oxide-semiconductor (CMOS) image sensor, or the like. In addition, another optical component such as a filter, a micro lens array (MLA), or the like may be disposed on a path of a light incident to the image sensor 102, in order to facilitate collection of the incident light. The filter may be a Bayer filter, an infrared filter, or the like. In addition, in a case that the structured light emitted by the structured-light projecting module 101 has a wavelength of λ, the filter may be configured to transmit only the wavelength λ, thereby improving a quality of images that are subsequently obtained.

Aline connecting the structured-light projecting module 101 and the image sensor 102 is called a base line. For example, the base line may extend along the x-axis as indicated in Figure 1. An optical axis of the structured-light projecting module 101 may be parallel and form an angle with an optical axis of the image sensor 102. In this embodiment, the optical axes of the structured-light projecting module 101 and the image sensor 102 are parallel. Such configuration can simplify calculation complexity when generating a depth image in a subsequent step.

The processing module 103 may include one or more processors and one or more memories, and may be configured to control the structured-light projecting module 101 and the image sensor 102 and receive related data for processing. The processor may include any or a combination of a digital signal processor (DSP), a multimedia application processor (MAP), a field-programmable gate array (FPGA), an application specific integrated circuit (ASIC), or the like. The memory may include any or a combination of a random-access memory (RAM), a read only memory (ROM), a flash, or the like. Control instruction and data processing instructions executed by the processing module 103 may be stored in the memory in a form of software, firmware, or the like, and may be invoked by the processor on requirement. Alternatively, the instructions may be directly solidified into a circuit to form a dedicated circuit (or a dedicated processor) for executing the instructions. The instructions may further be implemented as a combination of the software and the dedicated circuit. The processing module 103 may further include an input/output interface, and/or a network interface supporting network communication. In some embodiments, the processed data may be transmitted to another device or another unit in the system via an interface, for example, may be transmitted to a display unit or an external terminal device.

In this embodiment, the structured-light projecting module 101, the image sensor 102, and the processing module 103 may be arranged as independent modules. Alternatively, a part or all of these modules may be integrated in an electronic device. For example, the structured-light projecting module 101, the image sensor 102, and the processing module 103 may be integrated in a smartphone, a tablet computer, a notebook computer, or a camera. Reference is made to Figure 2. The structured-light projecting module 101, the image sensor 102, and the processing module 103 may be integrated in a smartphone 201, which is capable to perform depth imaging on the target object 104. As another example, the structured-light projecting module 101 and the image sensor 102 may be integrated in an electronic device, and the processing module 103 may be a cloud server, a third-party electronic device, or the like.

On a basis of the foregoing depth imaging system 100, the structured-light projecting module 101 may project a structured light onto a reference plane, and the image sensor 102 images the reference plane to obtain a reference image during calibration before delivery of a terminal device. During usage, the structured-light projecting module 101 projects the structured light to a target object, and images the target object through the image sensor 102 to obtain a target image. Hence, an offset of each pixel in the target image relative to a corresponding pixel in the reference image may be calculated, and depth information corresponding to each pixel is calculated according to the offset. The depth image can be generated according to the depth information corresponding to each pixel.

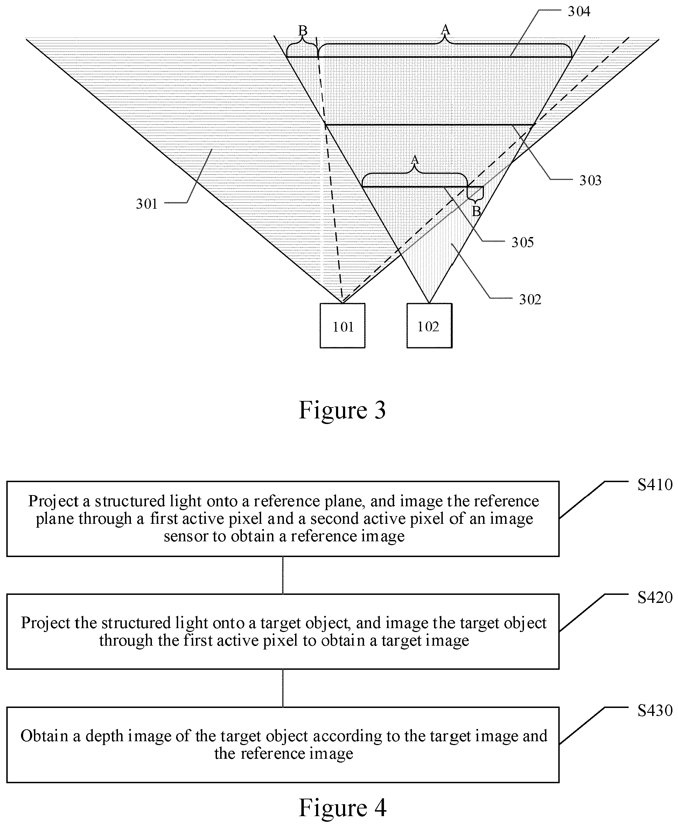

In the foregoing method, a part of the obtained depth image may be subject to a "black boarder" phenomenon, which renders some regions of the depth image ineffective, and hence affects application of the depth image in some fields. Figure 3 is a schematic diagram of a mechanism of generating a black border.

An optical projection range of the structured-light projecting module 101 is a region 301, and an optical receiving range of the image sensor 102 is a region 302. Theoretically, a depth image can be generated in a case that a target object is located in an overlapping range between the region 301 and the region 302. There is a distance between the structured-light projecting module 101 and the image sensor 102, and a dimension of a reference image 303 is fixed. Therefore, in a case that the target object is located in a plane away from a reference plane, some pixels in a target image 304 may match none of the pixels in the reference image 303, and thereby no corresponding depth information can be determined. In the depth image, the pixels having no determined corresponding depth information is zeroed as compensation. That is, values of the such pixels set as zero, resulting in the black border.

For example, in Figure 3, each pixel in a region A of the target image 304 and a region A of a target image 305 can match a corresponding pixel in the reference image 303. That is, corresponding depth information can be determined for such pixel. In comparison, no pixel in the reference image 303 corresponds to pixels in a region B of the target image 304 and a region B of the target image 305. That is, no corresponding depth information can be determined for these pixels. Therefore, locations corresponding to the region B of the target image 304 and the region B of the target image 305 are the black border in the final depth image. Generally, the closer a distance between the plane in which the target object is located and the reference plane is, the smaller an area occupied by the black border is; and the farther the distance between the plane and the reference plane is, the larger the area occupied by the black border is.

Face authentication is taken as an example. The black border may affect a field angle of view (FOV) during the face authentication, and a size of the black border in the depth image may change with the distance, which further increases uncertainty during the authentication. Specifically, when the face authentication is performed at different distances, the black border appears in different region of the depth image, and hence an effective region for the face authentication is different. A result of the face authentication may be affected when the user's face is located in the black border of the depth image, which degrades user experience. In practice, it is difficult to find an effective strategy for preventing an area of the black border in the depth image from changing with the distance.

In view of the above problem(s), a novel method for generating a depth image is provided according to an embodiment of the present disclosure. It is taken as an example for illustration that the method is applied to an electronic device. Reference is made to Figure 4, in which a method for generating a depth image includes following steps S410 to S430.

In step S410, a structured light is projected onto a reference plane, and the reference plane is imaged through a first active pixel and a second active pixel of an image sensor to obtain a reference image.

In this embodiment, a structured-light projecting module 101 in the electronic device may configured to emit a beam of the structured light, which is encoded as speckles, spots, stripes, a two-dimensional pattern, or the like, onto the reference plane. The structured light refers to a set of projected light rays whose spatial directions are known. The reference plane may be, for example, a plate located at a preset distance (for example, 0.5 m or 0.6 m) from an imaging system. The electronic device may image the reference plane through the first active pixel and the second active pixel of the image sensor, so as to obtain the reference image. A quantity of the second active pixel(s) may be one or more. As an example, the reference image may be obtained through a part of the second active pixels, or may be obtained through all second active pixels. In this embodiment, the obtained reference image may be stored in a designated storage, for example, a memory of a terminal device or a cloud server. Generally, the step S410 is performed during calibration before delivery of the terminal device. As an alternative, the step S410 may be performed during usage of the terminal device or during another stage. The present disclosure is not limited to the above cases. Hereinafter the first active pixel and the second active pixel of the image sensor are described in detail.

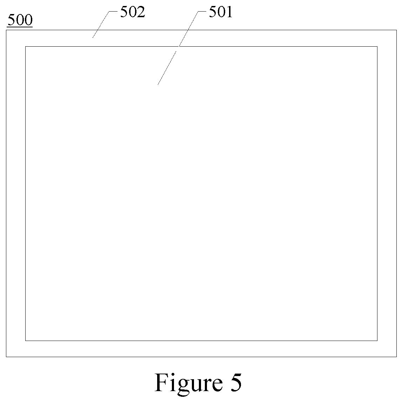

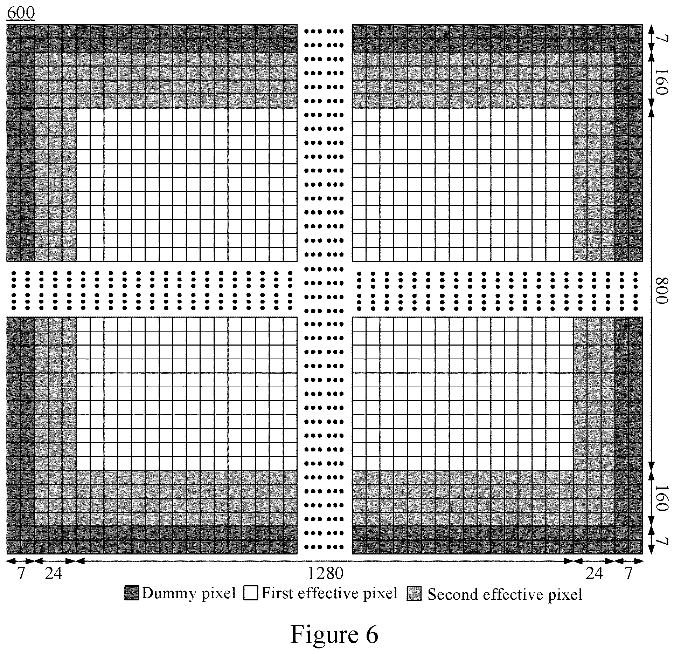

Reference is made to Figure 5. Generally, an image sensor 500 includes an effective-pixel region 501 located at a center and a dummy-pixel region 502 located on a periphery of the effective-pixel region 501. Figure 6 is a schematic structural diagram of a common image sensor 600. The image sensor 600 has a pixel array of 1344 columns and 1136 rows, namely, a total of 1526784 (1344×1136) pixels. In the 1526784 pixels, the central 1328 columns and the central 1120 rows define the effective-pixel region, which has a total of 1487360 (1328×1120) active pixels. In the 1526784 pixels, the upmost 8 rows, the bottom most 8 rows, the leftmost 8 columns, and the right 8 columns are the peripheral dummy-pixel region, which has a total of 39424 dummy pixels. All active pixels are pixels capable to participate in imaging. The dummy pixels do not participate in the imaging, but may participate in black-level calibration and interpolation on pixels at an edge of an image.

Generally, though all active pixels are capable to participate in the imaging, only a part (for example, those located in an imaging window region as follows) are actually configured to participate in the imaging in practice, while other active pixels are configured not to, such that an image resolution level of a terminal device corresponds to a quantity, a spatial distribution, or another configuration of the part of active pixels . In this field, an imaging window region is usually set in the image sensor, so as to implement "windowing" of the image sensor. The imaging window region is generally defined by four parameters, namely, a horizontal starting location (horizontal start, HS), a horizontal ending location (horizontal end, HE), a vertical starting location (vertical start, VS), and a vertical ending location (vertical end, VE). It is appreciated that the imaging window region may alternatively be defined by less parameters, for example, only by the HS and the VE.

Reference is further made to Figure 6. In the image sensor 600, a region defined by the 169^{th} row to the 968^{th} row and the 33^{rd} column to the 1312^{nd} column is set as the imaging window region. The image sensor may output an image having a resolution of 1280×800 through the imaging window region. In this embodiment, the first active pixels are active pixels used for actual imaging when using the terminal device, and the second active pixels are active pixels not used for actual imaging when using the terminal device. With respect to the forgoing imaging window region, the first active pixels are active pixels located in a designated region (i.e., the imaging window region) of the image sensor, and the second active pixels are active pixels located outside of the designated region. In an embodiment, the second active pixels may alternatively be a part of the active pixels located outside of the designated region. It can be appreciated that in another embodiment, an actual imaging region may be configured according to another rule. In such case, the first active pixels may be pixels in the actual imaging region, and the second active pixels are active pixels other than the first active pixels. Alternatively, the second active pixels may be a part of the active pixels other than the first active pixels. All these case fall within the protection scope of the present disclosure.

In this field, a reference image is conventionally generated by using only the first active pixels of an image sensor. In one aspect, it is a traditional default practice in this field, and has become a common practice of those skilled in the art. In another aspect, a reference image obtained in such manner has a same dimension as a target image acquired in a subsequently step, and hence relevant processing and computation is simple. Embodiments of the present disclosure get rid of the above technical prejudices, and creatively apply both the first active pixels and the second active pixels when generating the reference image. In this way, a dimension of the reference image is effectively increased without raising costs, and hence the black boarder in the depth image is suppressed or eliminated.

In step S420, the structured light is projected onto a target object, and the target object is imaged through the first active pixel to obtain a target image.

In this embodiment, the target object may be a face or another object that is to be imaged. The electronic device may project a beam of the structured light encoded as speckles, spots, stripes, a two-dimensional pattern, or the like, onto the target object through the structured-light projecting module 101. The beam of the structured light projected onto the target object needs to be consistent with that used for generating the reference image. Then, the target object is imaged through the first active pixel of the image sensor. Since the imaging window region is usually pre-configured before delivery of the terminal device, the terminal device reads a configuration file related to the imaging window region during usage, so as to determine the first active pixels automatically.

In step S430, a depth image of the target object is obtained according to the target image and the reference image.

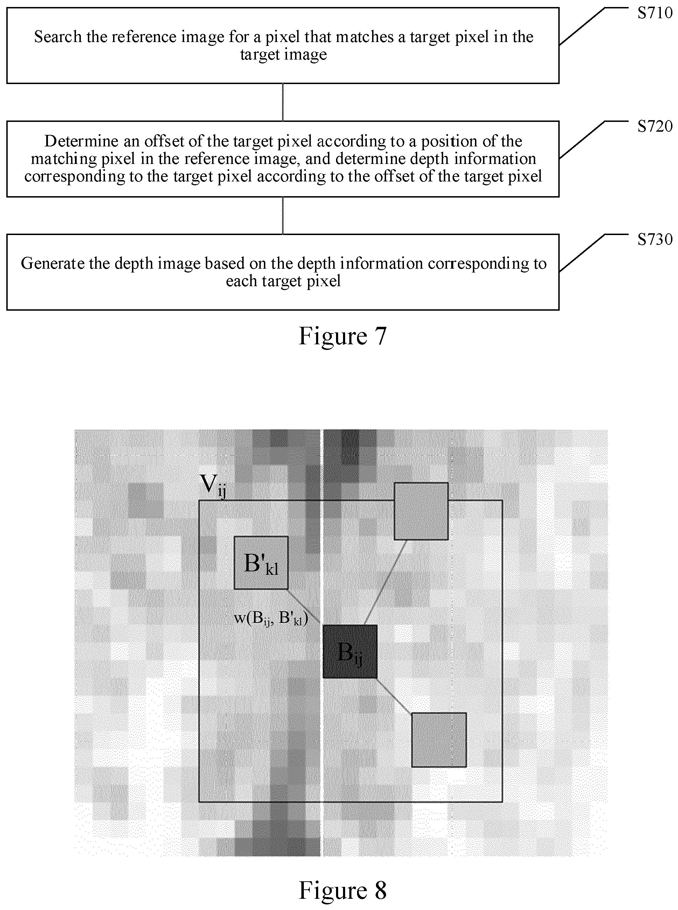

In this embodiment, the electronic device may read the reference image, which is generated in step S410, from the designated storage, for example, from the memory of the electronic device or the cloud server. After the electronic device obtains the reference image, reference may be made to steps S710 to S730 as shown in Figure 7, and the depth image of the target object is obtained.

In step S710, the reference image is searched for a pixel that matches a target pixel in the target image.

In this embodiment, the electronic device may determine a corresponding pixel, which matches the target pixel of the target image, in the reference image through block matching, matrix matching, or the like. Reference is made to Figure 8, in which the block matching is taken as an example. A pixel block Bᵢⱼ having a center of a target pixel Pᵢⱼ and a dimension of m×n pixels is extracted as a query pixel block for the target pixel Pᵢⱼ in the target image. Then, the reference image is searched for a match pixel block corresponding to the search pixel block Bᵢⱼ according to a preset search strategy and a similarity-evaluation index by using a search window Vᵢⱼ, which is centered at a position corresponding to the target pixel Pᵢⱼ and has a dimension of W×H. For example, in a case that a pixel block B'ₖₗ has the largest similarity-evaluation index w(Bᵢⱼ, B'ₖₗ) for the query pixel block Bᵢⱼ among the search window Vᵢⱼ, the pixel block B'ₖₗ is determined as the match pixel block corresponding to the query pixel block Bᵢⱼ. Thereby, the match pixel corresponding to the target pixel Pᵢⱼ is determined to be the pixel P'ₖₗ in the reference image. In the above case, i and k are both positive integers representing rows of the corresponding pixels, j and l are both positive integers representing columns of the corresponding pixels, and m, n, W, and H are all positive integers satisfying W > m and H > n. In addition, another means such as semi-global block matching (SGBM) may be used for implementing the pixel matching on requirement, which is not limited herein.

In addition, binarization may be performed in advance on the reference image and the target image in this embodiment, so as to facilitate matching and subsequent calculation. Those skilled in the art can appreciate that the binarization is only optional. For example, the binarization may be performed on the reference image and the target image through a global-threshold means, a local-threshold means, a dynamic-threshold means, a Niblack algorithm, a P-quantile means, an iteration means, an entropy means, a maximum inter-class variance algorithm, or another means which set values of pixels in an image equal to either 0 or 1.

The global-threshold means is taken as an example. The electronic device may determine that an average brightness of pixels across the entire image serves as a threshold, set pixel values greater than the threshold to be 1, and set pixel values smaller than the threshold to be 0. The global-threshold means has a good effect when applied to depth image generation in an indoor environment. The local-threshold means is taken as another example. The target image has, for example, 1280×800 pixels. An average brightness across the region (1, 1, 100, 100) may be first calculated. In such region, pixel values greater than the threshold are set to be 1, and pixel values smaller than the threshold are set to be 0. Then, the same processing is sequentially performed on the region (1, 101, 100, 200), the region (1, 201, 100, 300), etc., until the region (1201, 701, 1280, 800) to complete binarizing entire image. The local-threshold means has a good effect when applied to depth image generation in an outdoor environment.

In step S720, an offset of the target pixel is determined according to a position of the matching pixel in the reference image, and depth information corresponding to the target pixel is calculated according to the offset of the target pixel.

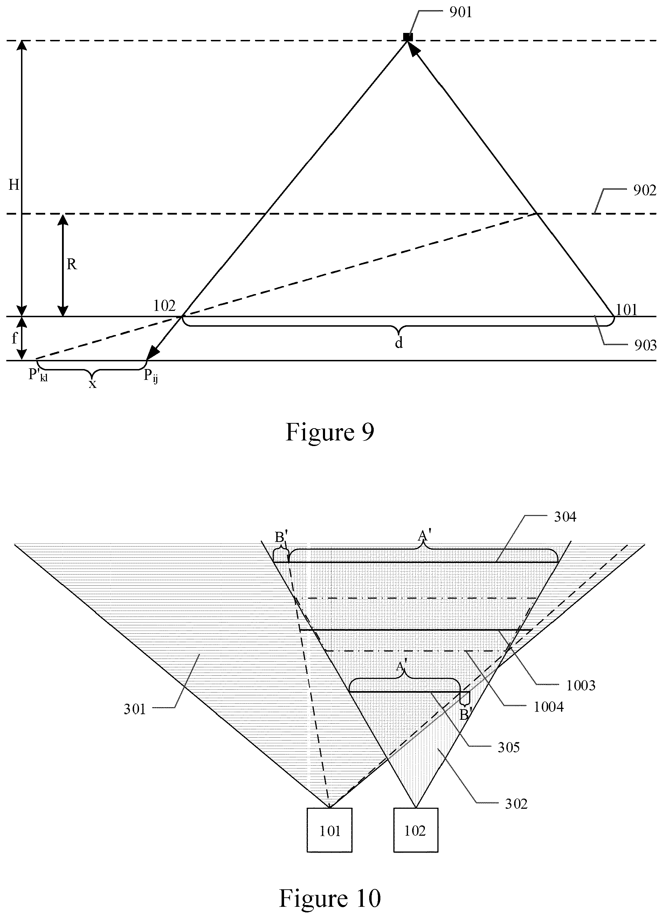

Reference is made to Figure 9. For example, a match pixel P'ₖₗ in the reference image corresponds to a target pixel Pᵢⱼ. An offset (namely, an aberration) x of the target pixel may be calculated according to a position of the match pixel P'ₖₗ in the reference image and a corresponding position of the target pixel Pᵢⱼ in the reference image. Then, a depth H of an imaged point 901 on a target object, namely, a distance between the imaged point 901 on the target object and a terminal device, may be calculated through a triangulation principle. For example, H=R/(1-(R·x)/(f·d)), where d is a length of the base line (namely, the line 903 connecting the structured-light projecting module 101 and the image sensor 102), R is a distance between the reference plane 902 and the base line, and f is a focal length of the image sensor 102. Since d, R, and f are fixed, the electronic device may calculate and obtain the depth information H corresponding to the target pixel after determining the offset x of the target pixel.

It is appreciated that in another embodiment, the depth information corresponding to the target pixel may be calculated through other means. For example, a correspondence table between offsets and depth information of pixels may be established in advance, and the depth information corresponding to the target pixel may be obtained from the mapping table through query after the offset x of the target pixel is determined. These means also fall within the protection scope of the present disclosure.

In step S730, the depth image is generated based on the depth information corresponding to each target pixel.

After the depth information corresponding to each target pixel is obtained in the step S720, the electronic device may convert the depth information into the depth image. For example, the depth image may be a gray-scale image. The greater a grayscale of a pixel in the depth image is, the smaller the depth H is; and the smaller the gray-scale of a pixel is, the greater the depth H is. Alternatively, the greater a grayscale of a pixel in the depth image is, the greater the depth H is; and the smaller the gray-scale of a pixel is, the smaller the depth H is. This embodiment is not limited thereto. In another embodiment, the depth image may have a form of an image channel or the like, which also falls within the protection scope of the present disclosure.

The model OV9286 image sensor, which is commonly used in a depth camera, is taken as an example. Such image sensor has active pixels of 1328 columns and 1120 rows. A depth image having a resolution of 640×400 or 1280×800 is usually required in this field. In conventional technology, the reference image is generated through 1280×800 active pixels in the image sensor during calibration of the depth camera in manufacture. During usage, the target object is imaged through the 1280×800 active pixels in the image sensor after a structured-light projecting module projects a beam of a structured light onto a target object to obtain a target image having a resolution of 1280×800. Thereby, a depth image is generated according to the target image (having a resolution of 1280×800) and the reference image (having a resolution of 1280×800). In comparison, in embodiments of the present disclosure, the electronic device may generate a reference image through 1328×1120 active pixels in the image sensor during calibration of the depth camera in manufacture. During usage, after the structured-light projecting module projects a beam of a structured light onto a target object, the electronic device images the target object through 1280×800 active pixels in the image sensor to obtain a target image having a resolution of 1280×800. Thereby, a depth image is generated according to the target image (having a resolution of 1280×800) and the reference image (having a resolution of 1328×1120), thereby a black border can be suppressed or eliminated.

Reference is made to Figure 10, which is a schematic diagram of a principle of generating a depth image in an embodiment. Similar to Figure 3, a projection range of a structured-light projecting module 101 is a region 301, and a receiving range of an image sensor 102 is a region 302. Each pixel in a region A' of a target image 304 and in a region A' of a target image 305 may match a corresponding pixel in a reference image 1003, that is, may have determined corresponding depth information. The regions A' are much greater than the regions A in Figure 3. Pixels in a region B' of the target image 304 and in a region B' of the target image 305 do not have corresponding pixel in the reference image 1003, that is, have no determined corresponding depth information. Therefore, locations corresponding to the region B' of the target image 304 and the region B' of the target image 305 are the black border in the final depth image. The regions B' are much smaller than the regions B' in Figure 3. In addition, in some ranges, for example, a range corresponding to the dot-dashed frame 1004 in Figure 10, all regions of the target image can have corresponding pixels in the reference image 1003, that is, have determined corresponding depth information. Hence, the black border is completely eliminated in the range corresponding to the dot-dashed box 1004.

Hence, the method for generating the depth image in embodiments is capable to suppress or eliminate the black border in the depth image, thereby optimizing application of the depth image in some fields. A depth camera or another terminal device having a depth photographing function is taken as an example. The method for generating the depth image in embodiments is capable to increase an FOV for acquiring a depth image, thereby improving quality of the depth image. In a case that face authentication is performed through the depth camera or the another terminal device having the depth photographing function, the FOV for the face authentication can be increased, reducing authentication failures due to the black border in the depth image. User experience is improved.

In addition, the method for generating the depth image in embodiments uses the second active pixels that already exist, and it is not necessary to change hardware. That is, the method for generating the depth image in embodiments of the present disclosure do not have additional optimization costs. Hence, the method for generating the depth image in embodiments can be widely applied.

In another embodiment, the method for generating the depth image is further improved to reduce an amount of matching computation in the step S710. Specifically, in the step S410, the electronic device may image the reference plane through the first active pixels and second active pixels in the image sensor to obtain multiple reference images having different dimensions, where the second active pixels of different quantities are used for obtaining different ones of the at least two reference images. A quantity of the multipole reference images having different sizes is two or more.

The image sensor as shown in Figure 6 is taken as an example. Pixels in the region defined by the 33^{rd} column to the 1312^{nd} column and the 169^{th} row to the 968^{th} row are the first active pixels. Pixels in the peripheral region defined by the 9^{th} column to the 32^{nd} column, the 1313^{rd} column to the 1336^{th} column, the 9^{th} row to a 168^{th} row, and the 969^{th} row to the 1128^{th} row are the second active pixels. As an example, a first reference image may be generated through pixels in the region defined by the 9^{th} column to the 1336^{th} column and the 9^{th} row to the 1128^{th} row, namely, all the first active pixels and all the second active pixels. A second reference image may be generated through pixels in the region defined by the 21^{st} column to the 1324^{th} column and the 89^{th} row to the 1048^{th}, namely, the first active pixels and a part of the second active pixels.

After the multiple reference images are generated, a reference image may be determined from the multiple reference images according to a designated rule, and a depth image of the target object may be obtained according to the target image and the selected reference image. For example, a distance from the target object to the reference plane may be first obtained. Then, the selected reference image may be determined from the multiple reference images according to such distance. An example is illustrated as follows.

In an embodiment, when acquiring the depth information for the target image, a distance between the target object and a reference terminal device may be determined via a laser ranging module or another distance sensor provided in a terminal device. Since a distance from the terminal device to the reference plane is fixed, the distance from the target object to the reference plane may be approximately determined after the distance between the target object to the reference terminal device is determined. It can be learned from Figure 3 and Figure 10 that the smaller the distance between the plane in which the target object is located and the reference plane is, the smaller the area of the black border is; and the larger the distance between the plane and the reference plane is, the larger the area of the black border is. Hence, a dimension of the selected reference image may be in positive correlation with the distance from the target object to the reference plane. That is, the larger the distance from the target object to the reference plane is, the larger the selected reference image may be.

Therefore, the first reference image may serve as the selected reference image in a case that the distance between the plane in which the target object is located and the reference plane is large, and the second reference image may serve as the selected reference image in a case that the distance between the plane in which the target object is located and the reference plane is small. Thereby, an amount of computation during the matching can be effectively reduced. The block matching is taken as an example. An algorithm complexity of the matching is proportional to O (N, M, W, H, m, n), where N and M are a quantity of rows and a quantity of columns, respectively, in the reference image (and other parameters are similar to those illustrate in the foregoing description). Therefore, in comparison with a solution always using the first reference image, the algorithm complexity during the matching can be effectively reduced when using the second reference image having a smaller dimension, which reduces the amount of computation.

In another embodiment, the multiple reference images may be generated through another manner. The image sensor as shown in Figure 6 is further as an example. A first reference image may be generated through pixels in a region defined by the 9^{th} column to the 1312^{nd} column and the 169^{th} row to the 968^{th} row. A second reference image may be generated through pixels in a region defined by the 33^{rd} column to the 1336^{th} column and the 169^{th} row to the 968^{th} row. A third reference image may be generated through pixels in a region defined by the 33^{rd} column to the 1312^{nd} column and the 9^{th} row to the 968^{th} row. A fourth reference image may be generated through pixels in a region defined by the 33^{rd} column to the 1312^{nd} column and the 169^{th} row to the 1128^{th} row.

Moreover, a reference image may be determined from the multiple reference images through another manner. For example, a position of a target object in a target image may be first determined through, for example, foreground image extraction or the like. Then, the selected reference image may be determined from the multiple reference images according to the position of the target object in the target image. An example is illustrated as follows.

In an embodiment, after the target image is obtained, the target object may be located in a left part of the target image. In such case, the black border may have a great impact in case of occurring at a left edge of the depth image, and have a smaller impact even if occurring at other regions. Hence, the first reference image may serve as the selected reference image. Similarly, in a case that the target object is located in a right part of the target image, the second reference image may serve as the selected reference image. In a case that the target object is located in an upper part of the target image, the third reference image may serve as the selected reference image. In a case that the target object is located in a lower part of the target image, the fourth reference image may serve as the selected reference image. In comparison with a solution always using the reference image having the largest dimension, the algorithm complexity during the matching can be effectively reduced when using the first to fourth reference images having smaller dimensions, which reduces the amount of computation.

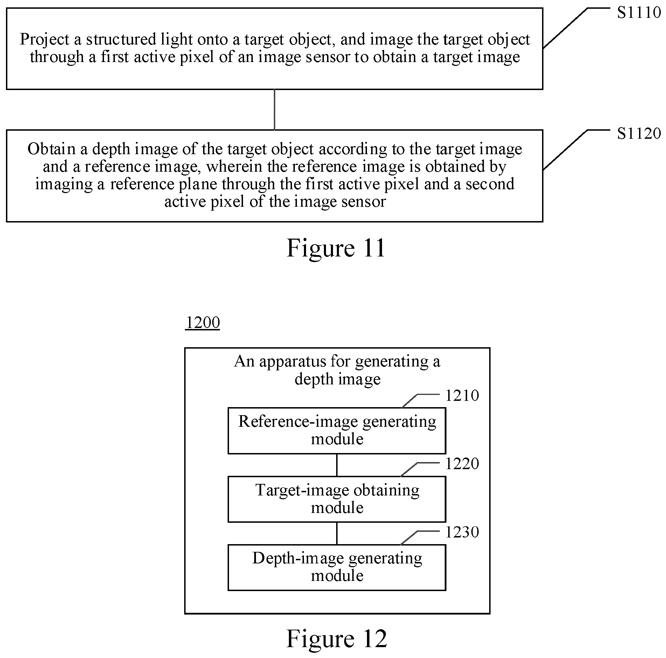

Another method for generating a depth image is provided according to an embodiment of the present disclosure. Reference is made to Figure 11, in which the method includes following steps S1110 to S1120.

In step S1110, a structured light is projected onto a target object, and the target object is imaged through a first active pixel of an image sensor to obtain a target image.

In step S1120, a depth image of the target object is obtained according to the target image and a reference image. The reference image is obtained by imaging a reference plane through the first active pixel and a second active pixel of the image sensor.

A method for generating a reference image is further provided according to an embodiment of the present disclosure. The method includes following steps. A structured light is projected onto a reference plane, and the reference plane is imaged through a first active pixel and a second active pixel of an image sensor to obtain a reference image. The first active pixel is an active pixel utilized when performing depth imaging on a target object.

Details of the steps in the method for generating the depth image and the method of generating the reference image have been described in the foregoing embodiments, and hence are not repeated herein.

Although the figures show a specific order of steps in the methods according to embodiments of the present disclosure, it does not require or imply that the steps have to be performed in such order, or that all shown steps have to be performed to achieve the expected result. Additionally or alternatively, a step may be omitted, multiple steps may be combined into one step, one step may be decomposed into multiple steps, and/or the like, when being performed.

An apparatus for generating a depth image may be further provided according to an embodiment of the present disclosure. Reference is made to Figure 12, in which an apparatus for generating a depth image 1200 may include a reference-image generating module 1210, a target-image obtaining module 1220, and a depth-image generating module 1230.

The reference-image generating module 1201 may be configured to project a structured light onto a reference plane, and image the reference plane through a first active pixel and a second active pixel of an image sensor to obtain a reference image. The target-image obtaining module 1220 may be configured to project the structured light onto a target object, and image the target object through the first active pixel to obtain a target image. The depth-image generating module 1230 may be configured to obtain a depth image of the target object according to the target image and the reference image.

In an embodiment, the first active pixel is an active pixel located in a designated region of the image sensor, and the second active pixel is an active pixel located outside of the designated region of the image sensor.

In an embodiment, the reference-image generating module 1210 is configured to image the reference plane through the first active pixel and all second active pixels of the image sensor.

In an embodiment, the reference-image generating module 1210 is configured to image the reference plane through the first active pixel and the second active pixels to obtain at least two reference images having different dimensions, where the second active pixels of different quantities are used for obtaining different ones of the at least two reference images. The depth-image generating module 1230 is configured to determine a selected reference image from the at least two reference images having different dimensions, and obtains the depth image of the target object according to the target image and the selected reference image.

In an embodiment of the present disclosure, the depth-image generating module 1230 is configured to determine the selected reference image from the at least two reference images by: obtaining a distance from the target object to the reference plane; and determining the selected reference image from the at least two reference images according to the distance from the target object to the reference plane.

In an embodiment, a dimension of the selected reference image is in positive correlation with the distance from the target object to the reference plane.

In an embodiment, the depth-image generating module 1230 is configured to determine the selected reference image from the at least two reference images by: determining a position of the target object in the target image; and determining the selected reference image from the at least two reference images according to the position of the target object in the target image.

In an embodiment of the present disclosure, the apparatus further includes: an image storage module, configured to store the reference image in advance in a designated storage. The depth-image generating module 1230 is configured to read the reference image from the designated storage, and obtain the depth image of the target object according to the target image and the read reference image.

In an embodiment of the present disclosure, the depth-image generating module 1230 is configured to obtain the depth image of the target object by: searching the reference image for a pixel that matches a target pixel of the target image; determining an offset of the target pixel according to a position of the matching pixel in the reference image; calculating depth information corresponding to the target pixel according to the offset of the target pixel; and generating the depth image by using depth information corresponding to each target pixel.

In an embodiment, the depth-image generating module 1230 is further configured to binarize the reference image and the target image, before searching the reference image for the pixel that matches the target pixel of the target image.

Another apparatus for generating a depth image is provided according to an aspect of the present disclosure. The apparatus includes a target-image obtaining module and a depth-image generating module. The target-image obtaining module is configured to project a structured light onto a target object, and image the target object through a first active pixel of an image sensor to obtain a target image. The depth-image generating module is configured to obtain a depth image of the target object according to the target image and a reference image. The reference image is obtained by imaging a reference plane through the first active pixel and a second active pixel of the image sensor.

An apparatus for generating a reference image is provided according to an aspect of the present disclosure. The apparatus includes a reference-image generating module configured to: project a structured light onto a reference plane, and image the reference plane through a first active pixel and a second active pixel of an image sensor to obtain a reference image. The first active pixel is an active pixel utilized when depth imaging is performed on a target object.

Details of the modules or units in the apparatus for generating a depth image and the apparatus for generating the reference image have been described in the corresponding method for generating the depth image, and hence are not repeated herein.

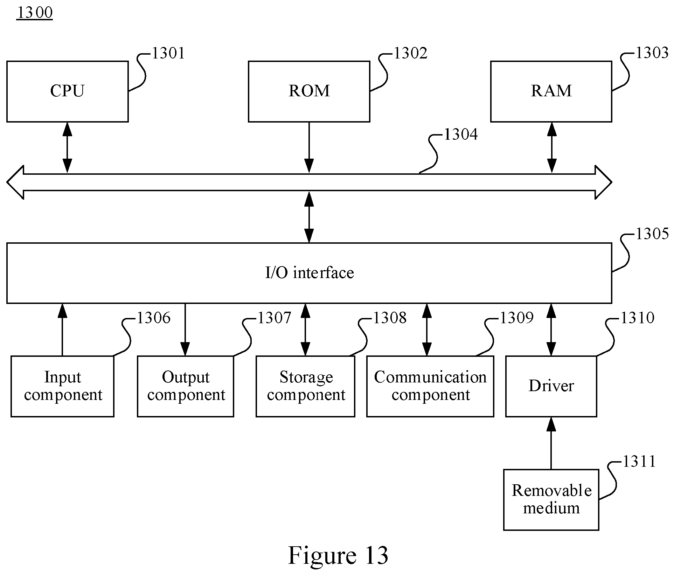

Figure 13 is a schematic structural diagram of a computer system adapted to implement an electronic device according to an embodiment of the present disclosure.

A computer system 1300 of an electronic device as shown in Figure 13 is merely exemplary and does not constitute any limitation on functions and applications of embodiments of the present disclosure.

As shown in Figure 13, the computer system 1300 includes a central processing unit (CPU)1301 capable to perform various appropriate actions and processing according to a program stored in a read-only memory (ROM) 1302 or a program loaded into a random-access memory (RAM) 1303 from a storage component 1308. The RAM 1303 further stores various programs and data required for system operations. The CPU 1301, the ROM 1302, and the RAM 1303 are connected to each other via a bus 1304. An input/output (I/O) interface 1305 is coupled to the bus 1304.

Components connected to the I/O interface 1305 includes: an input component 1306, including a keyboard, a mouse, or the like; an output component 1307, including a cathode ray tube (CRT), a liquid crystal display (LCD), a speaker, and the like; the storage component1308, including a hard disk or the like; and a communication component 1309, including a network interface card such as an LAN card or a modem. The communication component 1309 performs communication via a network such as the Internet. A driver 1310 is further coupled to the I/O interface 1305 on requirements. A removable medium 1311, such as a magnetic disk, an optical disc, a magneto-optical disk, or a semiconductor memory, is installed on the drive 1310 on requirement, so that a computer program read from the removable medium can be installed on the storage component 1308 on requirement.

Particularly, according to an embodiment of the present disclosure, the foregoing processes described with reference to the flowcharts may be implemented as computer software programs. A computer program product is provided according to an embodiment of the present disclosure. The computer program product includes a computer program stored in a computer-readable medium. The computer program includes program codes for performing the method as shown in the flowcharts. In such embodiment, the computer program may be downloaded and installed from the network via the communication portion 1309, and/or installed from the removable medium 1311. When the computer program is executed by the CPU 1301, various functions defined in the method and the apparatus according to embodiments of the present disclosure are implemented.

In another aspect, a computer-readable medium is provided according to an embodiment of the present disclosure. The computer-readable medium may be included in the electronic device as described in the forgoing embodiments, or may stand alone without being disposed into the electronic device. The computer-readable medium carries one or more programs, and the one or more programs when executed by the electronic device configure the electronic device to implement the method described in the foregoing embodiments. For example, the electronic device may implement the steps as shown in Figure 4 to Figure 9.

The computer-readable medium according to embodiments the present disclosure may be a computer-readable signal medium, a computer-readable storage medium, or any combination of the two. For example, he computer-readable storage medium may be, but is not limited to, an electric/magnetic/optical/electromagnetic/infrared/semi-conductor system/apparatus/component, or any combination of the above forms. A more specific example of the computer-readable storage medium may include, but is not limited to, an electrical connection having one or more wires, a portable computer magnetic disk, a hard disk, a random-access memory (RAM), a read-only memory (ROM), an erasable programmable read-only memory (EPROM or a flash memory), an optical fiber, a compact disk read-only memory (CD-ROM), an optical storage device, a magnetic storage device, or any appropriate combination of the above forms. Herein the computer-readable storage medium may be any tangible medium containing or storing a program, and the program may be used by, or in combination with, an instruction executing system/apparatus/device. Herein the computer-readable signal medium may include a data signal transmitted in a baseband or propagating as a part of a carrier wave, and the data signal carries computer-readable program codes. The propagating data signal may be various forms, which include but is not limited to an electromagnetic signal, an optical signal, or any suitable combination of the two. The computer-readable signal medium may be any computer-readable medium other than the computer-readable storage medium. The computer-readable medium may send, carry, or transmit a program, and the program is used by or in combination with an instruction executing system/apparatus/device. The program codes contained in the computer-readable medium may be transmitted via any appropriate medium, which includes but is not limited to: a wireless medium, a wire, an optical cable, radio frequency, any suitable combination of the above forms, or the like.

The flowcharts and block diagrams in the drawings illustrate feasible system architecture, functions, and operations that may be implemented by a system, a method, and a computer program product according to various embodiments of the present disclosure. In this regard, each box in a flowchart or a block diagram may represent a module, a program segment, or a part of codes. The module, the program segment, or the part of codes includes one or more executable instructions configured to implement a designated logic function. In some alternative embodiments, functions as annotations in the boxes may be implemented in a sequence different from that as shown in the drawings. For example, in practice, two boxes shown in succession may be performed substantially simultaneously, and sometimes may be performed in a reverse sequence, which is determined by related functions. Each block/box and a combination of block/boxes in a block diagram and/or a flowchart may be implemented through a dedicated hardware-based system, which is configured to achieve a specified function or operation, or may be implemented through a combination of dedicated hardware and computer instructions

The present disclosure is not limited to specific structures that are described hereinabove or shown in the drawings. Modifications and variations may be made without departing from the scope of the present disclosure. The protection scope of the present disclosure is defined by the appended claims.

## Claims

1. A computer-implemented method for generating a depth image, executable by an electronic device, wherein the method comprises:
projecting (410) a structured light onto a reference plane, and imaging the reference plane through first active pixels and second active pixels of an image sensor integrated in the electronic device to obtain a reference image;
projecting (420) the structured light onto a target object, and imaging the target object through the first active pixels and not through the second active pixels to obtain a target image; and
obtaining (430) a depth image of the target object according to the target image and the reference image,
wherein the first active pixels are active pixels located in a designated region of the image sensor, the second active pixels are active pixels of the image sensor located outside of the designated region, and a configuration of the first active pixels corresponds to an image resolution level of the electronic device.

2. The method according to claim 1, wherein the designated region is a rectangular region of pixels of the image sensor.

3. The method according to claim 1, wherein imaging the reference plane through the first active pixels and the second active pixels of the image sensor comprises:
imaging the reference plane through the first active pixels and all of the second active pixels of the image sensor.

4. The method according to any one of claims 1 to 3, wherein:
imaging the reference plane through the first active pixels and the second active pixels of the image sensor comprises:
imaging the reference plane through the first active pixels and the second active pixels to obtain at least two reference images having different sizes, wherein the second active pixels of different quantities are used for obtaining different ones of the at least two reference images; and
obtaining the depth image of the target object according to the target image and the reference image comprises:
determining a selected reference image from the at least two reference images; and
obtaining the depth image of the target object according to the target image and the selected reference image.

5. The method according to claim 4, wherein determining the selected reference image from the at least two reference images comprises:
obtaining a distance from the target object to the reference plane; and
determining the selected reference image from the at least two reference images according to the distance from the target object to the reference plane.

6. The method according to claim 5, wherein a larger one of the at least two reference images is determined as the selected reference image for a larger distance from the target object to the reference plane.

7. The method according to claim 4, wherein determining the selected reference image from the at least two reference images comprises:
determining a position of the target object in the target image; and
determining the selected reference image from the at least two reference images according to the position of the target object in the target image.

8. The method according to any one of claims 1 to 7, wherein the method further comprises:
storing the reference image in a designated storage; and
obtaining the depth image of the target object according to the target image and the reference image comprises:
reading the reference image from the designated storage, and
obtaining the depth image of the target object according to the target image and the read reference image.

9. The method according to any one of claims 1 to 8, wherein obtaining the depth image of the target object according to the target image and the reference image comprises:
searching (710) the reference image for a pixel that matches a target pixel of the target image;
determining (720) an offset of the target pixel according to a position of the matching pixel in the reference image;
calculating (720) depth information corresponding to the target pixel according to the offset of the target pixel; and
generating (730) the depth image based on the depth information corresponding to each target pixel.

10. The method according to claim 8, wherein before searching the reference image for the pixel that matches the target pixel of the target image, the method further comprises:
binarizing the reference image and the target image.

11. A method for generating a depth image, comprising:
projecting (1110) a structured light onto a target object, and imaging the target object through first active pixels of an image sensor and not through second active pixels of the image sensor to obtain a target image; and
obtaining (1120) a depth image of the target object according to the target image and a reference image;
wherein the reference image is obtained by imaging a reference plane through the first active pixels and the second active pixels; and
wherein the first active pixels are active pixels located in a designated region of the image sensor, the second active pixels are active pixels located outside of the designated region, and the designated region complies with a requirement of a terminal on image resolution.

12. A computer-readable storage medium, storing a computer program, wherein the computer program when executed by a processor implements the method according to any one of claims 1 to 11.

13. An electronic device, comprising:
a processor; and
a memory, configured to store instructions executable by the processor,
wherein the processor is configured to perform the method according to any one of claims 1 to 11 through executing the instructions.

## Patentansprüche

1. Computerimplementiertes Verfahren zum Erzeugen eines Tiefenbildes, das von einer elektronischen Vorrichtung ausführbar ist, wobei das Verfahren Folgendes umfasst:
Projizieren (410) von strukturiertem Licht auf eine Referenzebene und Abbilden der Referenzebene durch erste aktive Pixel und zweite aktive Pixel eines Bildsensors, der in die elektronische Vorrichtung integriert ist, um ein Referenzbild zu erhalten;
Projizieren (420) des strukturierten Lichts auf ein Zielobjekt und Abbilden des Zielobjekts durch die ersten aktiven Pixel und nicht durch die zweiten aktiven Pixel, um ein Zielbild zu erhalten; und
Erhalten (430) eines Tiefenbildes des Zielobjekts gemäß dem Zielbild und dem Referenzbild,
wobei die ersten aktiven Pixel aktive Pixel sind, die sich in einer benannten Region des Bildsensors befinden, die zweiten aktiven Pixel aktive Pixel des Bildsensors sind, die sich außerhalb der benannten Region befinden, und eine Auslegung der ersten aktiven Pixel einem Bildauflösungsmaß der elektronischen Vorrichtung entspricht.

2. Verfahren nach Anspruch 1, wobei die benannte Region eine rechteckige Region von Pixeln des Bildsensors ist.

3. Verfahren nach Anspruch 1, wobei das Abbilden der Referenzebene durch die ersten aktiven Pixel und die zweiten aktiven Pixel des Bildsensors Folgendes umfasst:
Abbilden der Referenzebene durch die ersten aktiven Pixel und alle der zweiten aktiven Pixel des Bildsensors.

4. Verfahren nach einem der Ansprüche 1 bis 3, wobei:
das Abbilden der Referenzebene durch die ersten aktiven Pixel und die zweiten aktiven Pixel des Bildsensors Folgendes umfasst:
Abbilden der Referenzebene durch die ersten aktiven Pixel und die zweiten aktiven Pixel, um mindestens zwei Referenzbilder mit unterschiedlichen Größen zu erhalten, wobei die zweiten aktiven Pixel unterschiedlicher Mengen zum Erhalten von verschiedenen der mindestens zwei Referenzbilder verwendet werden; und
das Erhalten des Tiefenbildes des Zielobjekts gemäß dem Zielbild und dem Referenzbild Folgendes umfasst:
Bestimmen eines ausgewählten Referenzbildes aus den mindestens zwei Referenzbildern; und
Erhalten des Tiefenbildes des Zielobjekts gemäß dem Zielbild und dem ausgewählten Referenzbild.

5. Verfahren nach Anspruch 4, wobei das Bestimmen des ausgewählten Referenzbildes aus den mindestens zwei Referenzbildern Folgendes umfasst:
Erhalten eines Abstands vom Zielobjekt zur Referenzebene; und
Bestimmen des ausgewählten Referenzbildes aus den mindestens zwei Referenzbildern gemäß dem Abstand vom Zielobjekt zur Referenzebene.

6. Verfahren nach Anspruch 5, wobei ein größeres der mindestens zwei Referenzbilder als das ausgewählte Referenzbild für einen größeren Abstand vom Zielobjekt zur Referenzebene bestimmt wird.

7. Verfahren nach Anspruch 4, wobei das Bestimmen des ausgewählten Referenzbildes aus den mindestens zwei Referenzbildern Folgendes umfasst:
Bestimmen einer Position des Zielobjekts im Zielbild; und
Bestimmen des ausgewählten Referenzbildes aus den mindestens zwei Referenzbildern gemäß der Position des Zielobjekts im Zielbild.

8. Verfahren nach einem der Ansprüche 1 bis 7, wobei das Verfahren ferner Folgendes umfasst:
Speichern des Referenzbildes in einem benannten Speicher; und
das Erhalten des Tiefenbildes des Zielobjekts gemäß dem Zielbild und dem Referenzbild Folgendes umfasst:
Lesen des Referenzbildes aus dem benannten Speicher, und
Erhalten des Tiefenbildes des Zielobjekts gemäß dem Zielbild und dem gelesenen Referenzbild.

9. Verfahren nach einem der Ansprüche 1 bis 8, wobei das Erhalten des Tiefenbildes des Zielobjekts gemäß dem Zielbild und dem Referenzbild Folgendes umfasst:
Durchsuchen (710) des Referenzbildes nach einem Pixel, das mit einem Zielpixel des Zielbildes übereinstimmt;
Bestimmen (720) eines Versatzes des Zielpixels gemäß einer Position des übereinstimmenden Pixels im Referenzbild;
Berechnen (720) von Tiefeninformationen, die dem Zielpixel entsprechen, gemäß dem Versatz des Zielpixels; und
Erzeugen (730) des Tiefenbildes auf Basis der Tiefeninformationen, die jedem Zielpixel entsprechen.

10. Verfahren nach Anspruch 8, wobei das Verfahren vor dem Durchsuchen des Referenzbildes nach dem Pixel, das mit dem Zielpixel des Zielbildes übereinstimmt, ferner Folgendes umfasst:
Binarisieren des Referenzbildes und des Zielbildes.

11. Verfahren zum Erzeugen eines Tiefenbildes, das Folgendes umfasst:
Projizieren (1110) von strukturiertem Licht auf ein Zielobjekt und Abbilden des Zielobjekts durch erste aktive Pixel eines Bildsensors und nicht durch zweite aktive Pixel des Bildsensors, um ein Zielbild zu erhalten; und
Erhalten (1120) eines Tiefenbildes des Zielobjekts gemäß dem Zielbild und einem Referenzbild;
wobei das Referenzbild durch Abbilden einer Referenzebene durch die ersten aktiven Pixel und die zweiten aktiven Pixel erhalten wird; und
wobei die ersten aktiven Pixel aktive Pixel sind, die sich in einer benannten Region des Bildsensors befinden, die zweiten aktiven Pixel aktive Pixel sind, die sich außerhalb der genannten Region befinden und die benannte Region mit einer Anforderung eines Endgeräts zur Bildauflösung konform ist.

12. Computerlesbares Speichermedium, auf dem ein Computerprogramm gespeichert ist, wobei das Computerprogramm, wenn es von einem Prozessor ausgeführt wird, das Verfahren nach einem der Ansprüche 1 bis 11 implementiert.

13. Elektronische Vorrichtung, die Folgendes umfasst:
einen Prozessor; und
einen Speicher, der dazu ausgelegt ist, Anweisungen zu speichern, die vom Prozessor ausführbar sind,
wobei der Prozessor dazu ausgelegt ist, durch Ausführen der Anweisungen das Verfahren nach einem der Ansprüche 1 bis 11 durchzuführen.

## Revendications

1. Procédé mis en œuvre par ordinateur pour générer une image en profondeur, exécutable par un dispositif électronique, dans lequel le procédé comprend les étapes suivantes :
projeter (410) une lumière structurée sur un plan de référence, et former une image du plan de référence par des premiers pixels actifs et des deuxièmes pixels actifs d'un capteur d'image intégré dans le dispositif électronique afin d'obtenir une image de référence ;
projeter (420) la lumière structurée sur un objet cible, et former une image de l'objet cible par les premiers pixels actifs et non par les deuxièmes pixels actifs afin d'obtenir une image cible ; et
obtenir (430) une image en profondeur de l'objet cible selon l'image cible et l'image de référence,
dans lequel les premiers pixels actifs sont des pixels actifs situés dans une région désignée du capteur d'image, les deuxièmes pixels actifs sont des pixels actifs du capteur d'image situés à l'extérieur de la région désignée, et une configuration des premiers pixels actifs correspond à un niveau de résolution d'image du dispositif électronique.

2. Procédé selon la revendication 1, dans lequel la région désignée est une région rectangulaire des pixels du capteur d'image.

3. Procédé selon la revendication 1, dans lequel l'imagerie du plan de référence par les premiers pixels actifs et les deuxièmes pixels actifs du capteur d'image comprend ce qui suit :
former une image du plan de référence par les premiers pixels actifs et de tous les deuxièmes pixels actifs du capteur d'image.

4. Procédé selon l'une quelconque des revendications 1 à 3, dans lequel :
l'imagerie du plan de référence par les premiers pixels actifs et les deuxièmes pixels actifs du capteur d'image comprend ce qui suit :
former une image du plan de référence par les premiers pixels actifs et les deuxièmes pixels actifs afin d'obtenir au moins deux images de référence ayant des tailles différentes, dans lequel les deuxièmes pixels actifs de quantités différentes sont utilisés pour obtenir différentes images des au moins deux images de référence ; et
l'obtention de l'image en profondeur de l'objet cible selon l'image cible et l'image de référence comprend ce qui suit :
déterminer une image de référence sélectionnée des au moins deux images de référence ; et
obtenir l'image en profondeur de l'objet cible selon l'image cible et l'image de référence sélectionnée.

5. Procédé selon la revendication 4, dans lequel la détermination de l'image de référence sélectionnée des au moins deux images de référence comprend ce qui suit :
obtenir une distance entre l'objet cible et le plan de référence ; et
déterminer l'image de référence sélectionnée des au moins deux images de référence selon la distance entre l'objet cible et le plan de référence.

6. Procédé selon la revendication 5, dans lequel l'image de référence la plus grande des au moins deux images de référence est déterminée comme image de référence sélectionnée pour la plus grande distance entre l'objet cible et le plan de référence.

7. Procédé selon la revendication 4, dans lequel la détermination de l'image de référence sélectionnée des au moins deux images de référence comprend ce qui suit :
déterminer une position de l'objet cible dans l'image cible ; et
déterminer l'image de référence sélectionnée des au moins deux images de référence selon la position de l'objet cible dans l'image cible.

8. Procédé selon l'une quelconque des revendications 1 à 7, dans lequel le procédé comprend en outre l'étape suivante :
stocker l'image de référence dans un stockage désigné ; et
l'obtention de l'image en profondeur de l'objet cible selon l'image cible et l'image de référence comprend ce qui suit :
lire l'image de référence à partir du stockage désigné, et
obtenir l'image en profondeur de l'objet cible selon l'image cible et l'image de référence lue.

9. Procédé selon l'une quelconque des revendications 1 à 8, dans lequel l'obtention de l'image en profondeur de l'objet cible selon l'image cible et l'image de référence comprend ce qui suit :
rechercher (710) dans l'image de référence un pixel concordant avec un pixel cible de l'image cible ;
déterminer (720) un décalage du pixel cible selon une position du pixel concordant dans l'image de référence ;
calculer (720) des informations de profondeur correspondant au pixel cible selon le décalage du pixel cible ; et
générer (730) l'image en profondeur sur la base des informations de profondeur correspondant à chaque pixel cible.

10. Procédé selon la revendication 8, dans lequel, avant de rechercher dans l'image de référence le pixel concordant avec le pixel cible de l'image cible, le procédé comprend en outre l'étape suivante :
binariser l'image de référence et l'image cible.

11. Procédé pour générer une image en profondeur, comprenant les étapes suivantes :
projeter (1110) une lumière structurée sur un objet cible, et former une image de l'objet cible par des premiers pixels actifs d'un capteur d'image et non par des deuxièmes pixels actifs du capteur d'image afin d'obtenir une image cible ; et
obtenir (1120) une image en profondeur de l'objet cible selon l'image cible et une image de référence ;
dans lequel l'image de référence est obtenue en formant une image d'un plan de référence par les premiers pixels actifs et les deuxièmes pixels actifs ; et
dans lequel les premiers pixels actifs sont des pixels actifs situés dans une région désignée du capteur d'image, les deuxièmes pixels actifs sont des pixels actifs situés à l'extérieur de la région désignée, et la région désignée satisfait à une exigence d'un terminal concernant une résolution d'image.

12. Support de stockage lisible par ordinateur stockant un programme informatique, dans lequel le programme informatique, lorsqu'il est exécuté par un processeur, met en œuvre le procédé selon l'une quelconque des revendications 1 à 11.

13. Dispositif électronique, comprenant :
un processeur ; et
une mémoire configurée pour stocker des instructions exécutables par le processeur,
dans lequel le processeur est configuré pour réaliser le procédé selon l'une quelconque des revendications 1 à 11 en exécutant les instructions.
